# EUROPEAN PATENT APPLICATION

(11) **EP 4 510 562 A1**
(43) Date of publication of application: **19.02.2025**
(21) Application number: 23306376.7
(22) Date of filing: 14.08.2023
(51) Int. Cl.: H04N 19/105, H04N 19/176, H04N 19/40, H04N 19/61

(54) **METHOD AND DEVICE FOR TRANSCODING A VIDEO BITSTREAM**

(71) Applicant: Fondation B Com, 35510 Cesson Sevigne (FR); Orange, 75015 Paris (FR)
(72) Inventor: ABDOLI, Mohsen, 35235 THORIGNE-FOUILLARD (FR); HENRY, Félix, 35760 SAINT-GREGOIRE (FR); CLARE, Gordon, 35740 PACE (FR)
(74) Representative: Cabinet Beau de Loménie

(57) **Abstract**

The invention concerns a method (TM) for transcoding a video default bitstream (B_{def}) of a default frame (D_{def}) into an altered bitstream (Bₐₗₜ) of an altered frame (Dₐₗₜ) comprising reconstructed blocks of pixels, wherein a replace area (RA) in the default frame (D_{def}) is replaced by a replaced content (RC) in the altered frame (Dₐₗₜ), and wherein pixels of intact blocks (IB) in said default frame (D_{def}) are reconstructed (E85, E230) as identical pixels in said altered frame (Dₐₗₜ).

## Description

### Field of the disclosure

The present invention generally relates to the field of media data transcoding. It relates more specifically to a method for transcoding a video bitstream and to a device for transcoding a video bitstream.

More particularly, the invention concerns a particular use of transcoding, in which the already coded bitstream is transcoded to replace an area of video frames, i.e. a replace area, with a replace content, the rest of the video frames being unchanged. "Already coded bitstream" means that the source content is compressed and encoded on a sender side, and modified later in the distribution chain.

Preferably but not restrictively, the replace area is relatively small with respect to the video resolution.

In particular, the invention may be used to replace a logo, a hard-coded subtitle (e.g. language change), personalize a customized advertisement or insert a sign language interpreter.

### Description of the Related Art

A first known solution to above scenarios is as follows:
1/ the source compressed video is decoded and decompressed to be represented with raw decoded pixels;
2/ A replace area is identified and consequently is replaced with a replace content;
3/ The modified signal is re-encoded to provide a new compressed video stream with the required modifications.

This solution has three main drawbacks. First, it degrades the compression efficiency of the end-user displayed video, since, as it is widely known, multiple-compression causes damage to the quality to bitrate tradeoff. Second, the re-encoding process could be costly (usually performed on public cloud servers). And third, the re-encoding process can cause additional latency in live video communication scenarios.

Another solution that sometime is used to address some forms of the above problem is to define independently coded areas on video signal covering the replace area and the transcoding is only applied on the replace area of the coded bitstream. Motion-Constrained Tiles Set (MCTS) in H.265/HEVC [MCTS] standard and Sub-Pictures in H.266/VVC [Subpicture] can be used for this purpose.

Both MCTS and sub-picture techniques allow encoding with constraining motion vectors such that each piece (i.e. tile or subpicture depending on the standard) can be decoded and transmitted independently. Therefore, defining pieces borders such that replacement area falls into one piece, while constraining other pieces such that they do not refer to that piece, would address the above problem.

However, this solution suffers from several drawbacks. In particular, if the replacement area is relatively small, then applying either MCTS or subpictures would require either very small pieces or large pieces with a small portion of replacement content. In the first case (i.e. small pieces), the total number of pieces is increased which could potentially be problematic as this parameter is usually chose carefully with respect to several other aspects (parallelism capacity, latency, etc.). In the second case (large pieces), as the replacement content occupies relatively a small portion of its piece, the re-encoding drawbacks (explained above) would still apply on a significant portion of the image.

The invention proposes a solution which avoids the need for separate encoding of the source content replace area of the second solution and the cumbersome re-encoding process of the first solution.

### Summary of the disclosure

To this end, the present invention provides a method for transcoding a video default bitstream of a default frame into an altered bitstream of an altered frame comprising reconstructed blocks of pixels, wherein a replace area in the default frame is replaced by a replaced content in the altered frame, the method comprising:
- identifying, in said default frame at least one transition block comprising pixels used as a reference for at least one reconstructed block;
- filling the pixels of said altered frame with a new content for said transition block, these pixels comprising :
   (i) values of collocated pixels in the default frame if these pixels are outside the replace area ; or
   (ii) values of collocated pixels in the replace content if these pixels are inside the replace area;
- computing an altered residual signal for said transition block as the difference between said new content and a default reconstruction signal computed for said transition block;
writing in said altered bitstream, for transition blocks, syntax elements obtained by applying a lossless residual coding to said altered residual signal.

Correlatively, the invention also concerns a transcoding device for transcoding a video default bitstream of a default frame into an altered bitstream of an altered frame comprising reconstructed blocks of pixels, wherein a replace area in the default frame is replaced by a replaced content in the altered frame, the transcoding device comprising:
- an identification module for identifying, in said default frame at least one transition block comprising pixels used as a reference for at least one reconstructed block;
- a filling module for filling the pixels of said altered frame with a new content for said transition block, these pixels comprising :
   (i) values of collocated pixels in the default frame if these pixels are outside the replace area ; or
   (ii) values of collocated pixels in the replace content if these pixels are inside the replace area;
- a computing module for computing an altered residual signal for said transition block as the difference between said new content and a default reconstruction signal computed for said transition block;
   a writing module for writing in said altered bitstream, for transition blocks, syntax elements obtained by applying a lossless residual coding to said altered residual signal.

Indeed, the invention imposes no specific encoding constraints. For example, the HEVC (High Efficiency Video Coding) or AVC (Advanced Video Coding) video coding standards may be used. While these encoding schemes maintain their own constraints, e.g. for intra-frame, inter-frame or residuals coding, the invention adds no further constraint to enable a subsequent replacement of the replace area. In fact, neither the replace area nor the replace content need to be known for encoding.

In one particular embodiment, pixels of intact blocks in said default frame are reconstructed as identical pixels in the altered frame, and the comprises writing, in said altered bitstream, for said intact blocks, syntax elements of said intact blocks in said default bitstream.

Therefore, while the default bitstream must be entirely decoded, the invention does not require the re-encoding of the pixels of the altered bitstream. Only the entropy recoding is performed. In particular, the pixels of the intact blocks are not re-encoded, which is very advantageous when the replace area is small with respect to the video resolution.

In one particular embodiment, a block of the default frame is identified as a transition block:
(i) if said block comprises at least one pixel which is not located in said replace area and which is used for coding at least one block in the neighborhood of said block; and
(ii) if said block contains at least one pixel in the replace area or if said block is coded using at least one pixel of a neighboring block in the neighborhood of said block and located in said replace area.

In one particular embodiment, the method comprises:
- identifying in said default frame at least one replace block comprising pixels that are all in said replace area;
- filling the pixels of a new content with values of collocated pixels in the replace content;
- computing an altered residual signal for said replace block as the difference between said new content and a default reconstruction signal computed for said replace block;
- writing in said altered bitstream, syntax elements corresponding to an altered quantized residual obtained by applying a lossy residual coding to said altered residual signal;
- filling the pixels of said altered frame by adding a dequantized residual obtained from said syntax elements to a prediction block computed for said replace block.

In one embodiment, said default reconstruction signal computed for said transition block or said replace block is obtained by adding a prediction block to a default dequantized residual, both computed for said block.

In one embodiment, said prediction block computed for a block is computed using reference pixels from said altered frame and a prediction mode given by a syntax element corresponding to said block and obtained by parsing said default bitstream.

The invention also concerns a transcoding device comprising at least one processor and a memory having stored thereon a program for implementing the above mentioned method for transcoding a video default bitstream.

The invention also concerns a computer program which on execution by a transcoding device causes the transcoding device to execute the method for transcoding a default video bitstream according to one of Claims 1 to 5.

### Brief description of the drawings

Figure 1 illustrates an example of an environment in which the invention can be implemented ;
Figure 2 illustrates the hardware architecture of such a transcoding device in a particular embodiment of the invention ;
Figures 3 and 4 are flowcharts of steps of a method for transcoding a video bitstream according to a specific embodiment of the invention;
Figure 5 illustrates the functional architecture of such a transcoding device in a particular embodiment of the invention.

### Detailed description

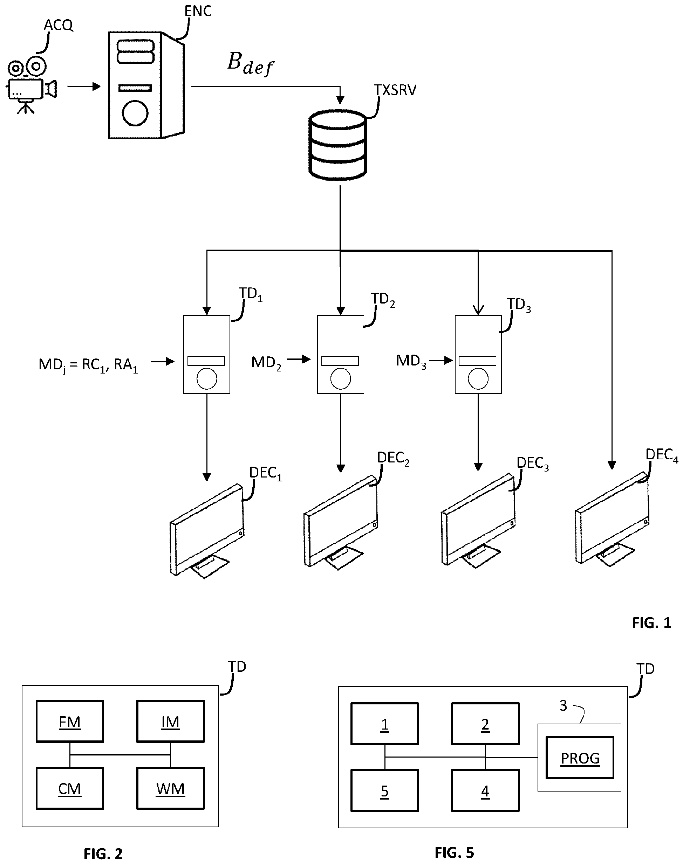

**Figure 1** illustrates an example of an environment in which the invention can be implemented.

This figure illustrates a system comprising an acquisition device ACQ, a source encoding server ENC, a transmission server TXSRV, a plurality of transcoding devices TDᵢ in accordance with the invention and a plurality of decoding devices DECⱼ.

The source encoding server ENC takes an input source video and generates a bitstream denoted as default bitstream *B_{def}.* This encoding process might be constrained.

For example, the HEVC (High Efficiency Video Coding) or AVC (Advanced Video Coding) video coding standards may be used. As known by the man skilled in the art, these standards have specific coding constraints, e.g. for intra-frame (intra), inter-frame coding (inter) or residuals coding.

In the following, we will consider that each frame is coded into blocks, hereafter referred to as CU.

Depending on the coding scheme, these blocks may be of different natures. In the context of the invention, a block CU may for example be:
- a coding unit, representing a rectangular region of a frame that can be coded independently of other regions, such as a coding unite used for intra-frame (intra-coding) and inter-frame (inter-coding) compression in HEVC (High Efficiency Video Coding) ;
- a prediction unit representing a rectangular region of the frame that is predicted from a reference (usually another frame) to reduce temporal redundancy ;
- a macroblock, a larger processing unit such as used in MPEG-4 AVC (Advanced Video Coding).

In the example illustrated in Fig. 1, the transmission server TXSRV transmits the default bitstream *B_{def}* to the decoding devices DECⱼ, either directly (e.g. to DEC₄) or via a transcoding device TDᵢ compliant with the invention (for decoders DEC₁ to DEC₃).

In the example of Figure 1, the decoder device DEC₄ receives the default bitstream *B_{def}* .

Instead, each of the DECⱼ decoding device (j=1...3) receives an altered bitstream *Bₐₗₜ* obtained by the corresponding transcoding device TDⱼ by transcoding the default bitstream *B_{def}.*

The invention only concerns the transcoding carried out by the transcoding devices TDⱼ; in other words, the source encoding server ENC and the decoding devices DECⱼ are not affected by the invention.

Each transcoder TDⱼ receives as input the default bitstream *B_{def}* together with metadata MDⱼ to identify a replace content RCⱼ and a replace area RAⱼ.

Each transcoder TDⱼ may receive a different replace content RC and/or a different replace area RA. Alternatively, at least two transcoders may receive a same replace content RC and/or a same replacement area RA.

A given transcoder TDⱼ may obtain the replacement content RC and/or the replace area RA by any means.

In the embodiment described here, the transcoders devices TDⱼ are identical and therefore denoted TD.

As explained in detail below, a transcoder device TD considers each CU block according to its position relative to the replace area. At the block level, the transcoder device TD changes the syntax elements of a subset of coded blocks CU and re-writes them accordingly. Three types of blocks are considered:
Intact blocks (or blocks of the "Intact Block" type IB) are outside the replace area of the frame, meaning that they have no pixel located in the replace area. They will keep the same reconstruction pixels as in the default bitstream. However, syntax elements representing these blocks might be modified in order to guarantee the same reconstruction;
Replace blocks (or blocks of the "Replace Block" type RT) are inside the replaceable area of the frame, meaning that all their pixels are located in the replaceable area. They are not used as reference for intra prediction of intact blocks. As a result, their replacement process includes only changing the residual signal according to the replace content.
Once the new residual is determined, it might be transformed, quantized and replace the existing residual of the block in the default bitstream;
Transition blocks guarantee that no change in reconstruction of pixel after the transcoding method is executed would leak into the area of intact blocks. Precisely, the replacement of a transition block shall ensure that all of its border pixels that are allowed to be used as reference for intra prediction of future blocks (i.e. in coding order) are reconstructed identically to the initial bitstream.

**Figure 2** illustrates the hardware architecture of such a transcoding device TD in a particular embodiment of the invention.

With reference to Figure 2 the transcoding device TD may have the hardware architecture of a computer. It comprises a processor 1. Although illustrated as a single processor 1, two or more processors can be used according to particular needs, desires, or particular implementations of the transcoding device TD. Generally, the processor 1 executes instructions and manipulates data to perform the operations of the transcoding device TD and any algorithms, methods, functions, processes, flows, and procedures as described in the present disclosure.

The encoding device TD also comprises communication means 5. Although illustrated as a single communication means 5 in Figure 2, two or more communication means can be used according to particular needs, desires, or particular implementations of the transcoding device TD. The communication means are used by the transcoding device for communicating with another electronic device. Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated encoding device.

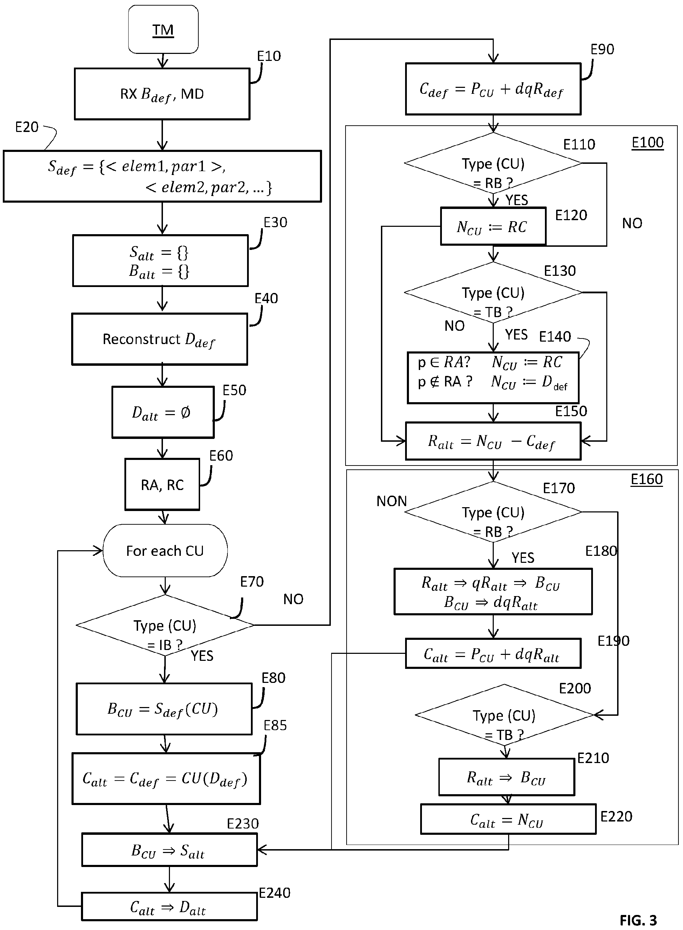

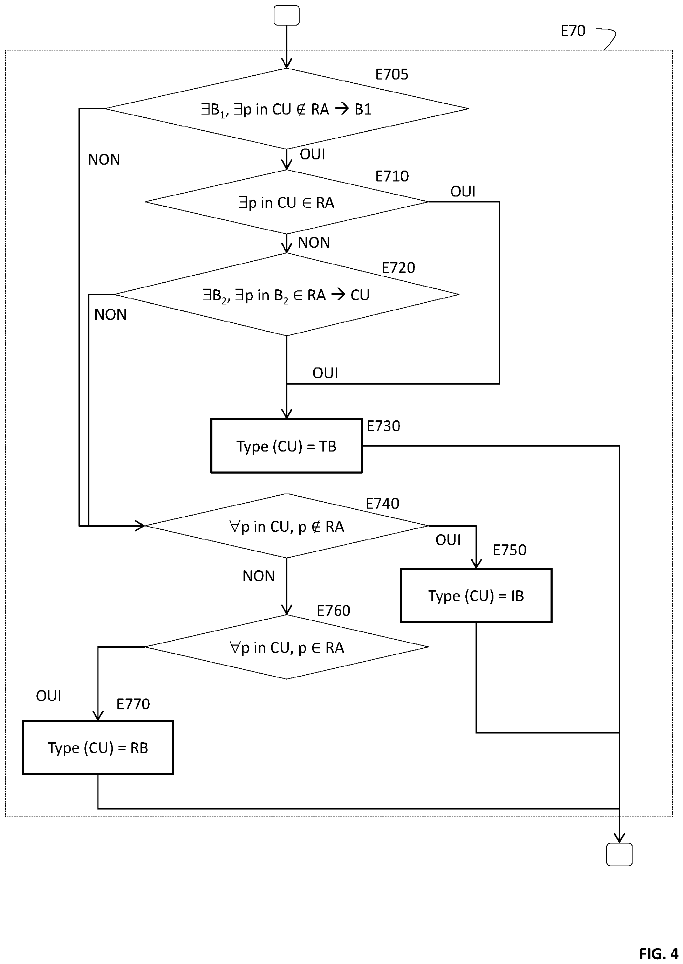

The transcoding device TD also comprises a random access memory 2, a read-only memory 3, and a non-volatile memory 4. The read-only memory 3 of the device constitutes a recording medium conforming to the invention, which is readable by the processor 1 and on which is recorded a computer program PROG conforming to the invention and containing instructions for carrying out the steps of a transcoding method TM according to the invention, the main steps of which are illustrated in Figures 3 and 4.

The program PROG defines functional modules of the device, which are based on or control the aforementioned elements 1 to 5 of the transcoding device, and which comprise in particular the following modules described hereafter with reference to Figure 5:
- the identification module IM;
- the filling module FM;
- the computing module CM; and,
- the writing module WM,.

**Figures 3** **and** **4** illustrate the main steps of a transcoding method TM according to embodiments of the invention.

With reference to Figure 3, the transcoding method TM comprises a step E10 of obtaining the default bitstream *B_{def}* of a frame and metadata MD.

The transcoding method TM comprises a step of parsing the default bitstream *B_{def}* and storing the parsed syntax elements *elem*1*, elem*2, *...* and their associated entropy coding parameters *par*1*, par*2, ... in a default buffer *S_{def}.* Syntax elements represent how the blocks CUs are arranged to form a frame and what coding decisions are made by the encoder/transcoder.

At step E30, the transcoding method TM initializes an altered buffer *Sₐₗₜ.* The transcoding method TM changes the arrangement of some blocks CUs and their corresponding coding decision, the *Sₐₗₜ* buffer will eventually contain the final arrangement.

At step E40, the transcoding method TM decodes the default parsed bitstream *B_{def}* stored in the buffer *S_{def}* and reconstructs the default decoded image as *D_{def}.* This step determines the decoded pixels of each block of the default bitstream *B_{def}.*

At step E50, the transcoding method TM initializes an empty reconstructed image *Dₐₗₜ.* This reconstructed image *Dₐₗₜ* is provided to comprise the new altered decoded pixels of the replaced blocks CUs from which the next neighboring CUs should predict. An empty altered bitstream *Bₐₗₜ* is also initialized to be filled block by block.

At step E60, the transcoding method identifies a replace area RA and a replace content RC.

Then the transcoding method TM executes a loop comprising steps E70 to E240 for each current block CU in the decoding order of the CUs in the frame.

At step E70 the type of the block is determined. Figure 5 described below details an implementation of this determination step in one embodiment.

If the current CU is of the Intact Block IB type; the result of a test E75 is positive. At a step E80, the transcoding method identifies the syntax elements *S_{def}*(*CU*) of the current CU in the store buffer *S_{def}*.and sets *B_{CU}* = *S_{def}*(*CU*).

At step E85, the collocated pixels of the current CU in the default decoded image *D_{def}* are copied in a block of reconstructed pixels *C_{def}* and an altered signal *Cₐₗₜ.* is set as *C_{def}* for the pixel positions corresponding to the current block. After step E85, step E230 is executed.

If the current CU is not of the Intact Block type; the result of the test E75 is negative and the transcoding method executes steps E90 to E220;

At step E90, the transcoding method TM computes the default reconstruction signal as *C_{def}* = *P_{CU}* + *dqR_{def},* where:
- *P_{CU}* is the prediction block computed using the reference pixels from *Dₐₗₜ* and the prediction mode stored in the *S_{def}* buffer; and
- *dqR_{def}* is the default dequantized residual obtained by performing iQjiT on the parsed transform coefficients stored in the *S_{def}* buffer.

At a general step E100, a residual signal *Rₐₗₜ* for the altered signal is computed. This difference between an original content and a predicted content can be based on intra-prediction, inter-prediction, or a combination of both, depending on the compression algorithm and coding mode. This general step E100 comprises steps E110 to E150 described below.

If the current CU is of the Replace Block RB type; the result of a test E110 is positive. At step E120, the new content *N_{CU}* for the current CU is filled with collocated pixels values from the replace content RC. After step E120 step E150 is executed.

If the current CU is of the Transition Block TB type; the result of a test E130 is positive. At step E140, the new content *N_{CU}* for the current CU is filled as follows:
- pixels located in the replace area RA are filled with values of collocated pixels from the replace content RC; and
- other pixels are filled with values of collocated pixels from the default decoded image *Dde f.*

After step E140 step E150 is executed.

At step E150, the altered residual signal *Rₐₗₜ* is computed as the difference between :
(i) the new content *N_{CU}* for the current CU (calculated at step E120 for Replace Blocks and at step E140 for Transition Blocks) and
(ii) the default reconstruction signal *C_{def}* calculated at step E90.

At a general step E160, whatever the block type of the current block, the transcoding method TM re-encodes its altered residual *Rₐₗₜ,* obtains its syntax elements and computes an block *Cₐₗₜ* for the current block CU. This general step E160 comprises steps E170 to E220 described below.

If the current CU is of the Replace Block RB type; the result of a test E170 is positive. At step E180, a lossy residual coding is applied to the altered residual *Rₐₗₜ* and an altered quantized residual *qRₐₗₜ* is obtained. The syntax elements corresponding to the quantized residual *qRₐₗₜ* are obtained and set as *B_{CU}.*

An altered dequantized residual *dqRₐₗₜ* is obtained by performing iQ/iT (inverse quantization and inverse transform operation) of these syntax elements *B_{CU}.*

At step E190, the new reconstruction signal *Cₐₗₜ* is obtained by adding the altered dequantized residual *dqRₐₗₜ* to the prediction block *P_{CU}* computed at step E90.

After step E190, step E230 is executed.

If the current block CU is of the Transition Block TB type; the result of a test E200 is positive. At step E210, a lossless residual coding is applied on the altered residual signal *Rₐₗₜ* computed at step E150 to obtain conformant syntax elements set as *B_{CU}.*

At step E220, the new reconstruction signal *Cₐₗₜ* is obtained as new content *N_{CU}* computed at step E140. The man skilled in the art, understand that in the case of a lossless coding, adding the coded residual signal to the prediction block *P_{CU}* as in step E190 would give the same signal *N_{CU}.*

After step E190; step E230 is executed.

At step E230, the transcoding method writes the syntax elements *B_{CU}* obtained at step E80 for the intact blocks, at step E180 for the replace blocks or at step E210 for the transition blocks in the altered buffer *Sₐₗₜ* initialized at step E30.

At step E240, the reconstructed image *Dₐₗₜ* initialized at step E50 is filled with the reconstruction signal *Cₐₗₜ* obtained at step E85 for the intact blocks, at step E190 for the replace blocks or at step E220 for the transition blocks on the pixel positions corresponding to the current block CU.

In this embodiment, step E240 is the last step the loop E70-E240 executed for each CU in the decoding order in the frame.

After step E240, a loop comprising is executed for each syntax element *elem* and its associated entropy coding parameter *par* in the altered buffer *Sₐₗₜ.*

During this loop, the transcoding method TM writes the current syntax element *elem* in the altered bitstream *Bₐₗₜ* initialized at step E50, using the associated entropy coding parameter *par.* This step comprises binarizing the syntax element *elem* using the standard specification for this syntax element, and for each obtained binary element bin:
- obtain the index of the associated entropy coder context model, using the look-up table of the standard specification;
- encoding the binary element bin with the obtained context model; and
- updating the context model state using the bin value.

**Figure 4** details, in one embodiment, step E70 for determining the type of the current block CU. In the embodiment, step E70 is made of steps E705 to E770.

A neighbourhood of a given CU is defined as set of other CUs, where each of the said other CUs have at least one pixel in immediate adjacency with the said given CU.

At step E705, it is determined if it exists at least one block B₁ in the neighbourhood of CU that is coded with reference to at least one pixel of the current block CU which is not located in the replace area RA. If yes it is further determined (step E710) whether the current block CU contains at least one pixel in the replace area or (step E720) whether the current block CU is coded using at least one block B₂ in the neighborhood of CU, such that the current CU is coded using at least one pixel from B₂, located in said replace area RA.

If the results of test E705 is positive and if either the result of test E710 or E720 is positive, at step E730 the current block CU is determined to be of the transition block TB type.

If the result of test E705 is negative or if both the results of tests E710 and E720 are negative, it is determined at step E740 whether all pixels of the current block are outside the replace area. If so, at step E750 the current block CU is determined to be of the intact block IB type.

If the result of test E745 is negative, it is determined at step E760 whether all pixels of the current block are inside the replace area. If so, at step E750 the current block CU is determined to be of the intact block IB type. If so, at step E770 the current block CU is determined to be of the replace block RB type.

Steps E730, E750 or E770 end the determination step E70.

**Figure 5** illustrates the functional architecture of a transcoding device TD in a particular embodiment of the invention.

The transcoding device comprises an identification module IM, a filling module FM, a computing module CM and a writing module WM.

The identifying module IM is configured to classify the blocks in the default frame, into intact blocks IM, transition blocks TB and replace blocks RB. The identifying module implements the method detailed Figure 4.

The filling module FM is configured to fill the pixels the said altered frame with a new content for transition blocks TB. These pixels comprise (i) values of collocated pixels in the default frame if these pixels are outside the replace area or (ii) values of collocated pixels in the replace content if these pixels are inside the replace area.

The computing module CM is configured to compute the altered residual signal for transition blocks TB.

The writing module is configured to write the syntax elements in the altered bitstream. In particular, these syntax elements are identical to those in the default bitstream for intact blocks. For transition blocks, they are obtained by applying a lossless residual coding to the altered residual signal obtained by the computing module CM. For replace blocks, they are obtained by applying a lossy residual coding to the difference between the new content and a default reconstruction signal for these replace blocks.

## Claims

1. A method (TM) for transcoding a video default bitstream (B_{def}) of a default frame (D_{def}) into an altered bitstream (Bₐₗₜ) of an altered frame (Dₐₗₜ) comprising reconstructed blocks of pixels, wherein a replace area (RA) in the default frame (D_{def}) is replaced by a replaced content (RC) in the altered frame (Dₐₗₜ), the method comprising:
- identifying (E70), in said default frame (*D_{def}*) at least one transition block (TB) comprising pixels used as a reference for at least one reconstructed block;
- filling (E140, E220, E240) the pixels of said altered frame (Dₐₗₜ) with a new content (*N_{CU}*) for said transition block (TB), these pixels comprising :
(i) values of collocated pixels in the default frame (*D_{def}*) if these pixels are outside the replace area (RA) ; or
(ii) values of collocated pixels in the replace content (RC) if these pixels are inside the replace area (RA);
- computing (E150) an altered residual signal (*Rₐₗₜ*) for said transition block (TB) as the difference between said new content (*N_{CU}*) and a default reconstruction signal (*C_{def}*) computed (E90) for said transition block (TB);
- writing (E230) in said altered bitstream (Bₐₗₜ), for transition blocks (TB), syntax elements (*B_{CU}*) obtained by applying (E210) a lossless residual coding to said altered residual signal (Rₐₗₜ).

2. A method (TM) for transcoding a video default bitstream (*B_{def}*) according to Claim 1 wherein pixels of intact blocks (IB) in said default frame (D_{def}) are reconstructed (E85, E230) as identical pixels in said altered frame (Dₐₗₜ), the method comprising writing (E230) in said altered bitstream (Bₐₗₜ), for said intact blocks (IB), syntax elements (*B_{CU}*) of said intact blocks (IB) in said default bitstream (B_{def}).

3. A method (TM) for transcoding a video default bitstream (*B_{def}*) according to Claim 1 or 2 wherein, a block (CU) of the default frame (D_{def}) is identified (E70) as a transition block (TB):
(i) if (E705) said block (CU) comprises at least one pixel which is not located in said replace area (RA) and which is used for coding at least one block (B1) in the neighborhood of said block (CU); and if
(ii) said block (CU) (E710) contains at least one pixel in the replace area (RA) or if (E720) said block (CU) is coded using at least one pixel of a neighboring block (B₂) in the neighborhood of said block (CU) and located in said replace area (RA).

4. A method (TM) for transcoding a video default bitstream (*B_{def}*) according to any one of Claims 1 to 3, the method comprising:
- identifying (E110) in said default frame (D_{def}) at least one replace block (RB) comprising pixels that are all in said replace area (RA);
- filling (E120) the pixels of a new content (*N_{CU}*) with values of collocated pixels in the replace content (RC);
- computing (E150) an altered residual signal (*Rₐₗₜ*) for said replace block (RB) as the difference between said new content (*N_{CU}*) and a default reconstruction signal (*C_{def}*) computed (E90) for said replace block (TB);
- writing (E230) in said altered bitstream (Bₐₗₜ), syntax elements (*B_{CU}*) corresponding to an altered quantized residual (*qRₐₗₜ*) obtained (E180) by applying a lossy residual coding to said altered residual signal (Rₐₗₜ) ;
- filling (E190, E240) the pixels of said altered frame (Dₐₗₜ) by adding (E190) a dequantized residual (*dqRₐₗₜ*) obtained (E180) from said syntax elements (*B_{CU}*) to a prediction block (P_{CU}) computed (E90) for said replace block (RB).

5. A method (TM) for transcoding a video default bitstream (B_{def}) according to any one of Claims 1 to 4, wherein said default reconstruction signal (C_{def}) computed for said transition block (TB) or said replace block (RB) is obtained (E90) by adding a prediction block (P_{CU}) to a default dequantized residual (dqR_{def}), both computed (E90) for said block (TB, RB).

6. A method for transcoding a video default bitstream (B_{def}) according to any one of Claims 4 to 5, wherein said prediction block (P_{CU}) computed for a block (TB, RB) is computed using reference pixels from said altered frame (Dₐₗₜ) and a prediction mode given by a syntax element corresponding to said block (TB, RB) and obtained by parsing (E20) said default bitstream (B_{def}).

7. A transcoding device (TD) for transcoding a video default bitstream (B_{def}) of a default frame (D_{def}) into an altered bitstream (Bₐₗₜ) of an altered frame (Dₐₗₜ) comprising reconstructed blocks of pixels, wherein a replace area (RA) in the default frame (D_{def}) is replaced by a replaced content (RC) in the altered frame (Dₐₗₜ), the transcoding device comprising:
- an identification module (IM) for identifying (E70), in said default frame (*D_{def}*) at least one transition block (TB) comprising pixels used as a reference for at least one reconstructed (TD)block;
- a filling module (FM) for filling (E140, E220, E240) the pixels of said altered frame (Dₐₗₜ) with a new content (*N_{CU}*) for said transition block (TB), these pixels comprising :
(i) values of collocated pixels in the default frame (*D_{def}*) if these pixels are outside the replace area (RA) ; or
(ii) values of collocated pixels in the replace content (RC) if these pixels are inside the replace area (RA);
- a computing module (CM) for computing (E150) an altered residual signal (*Rₐₗₜ*) for said transition block (TB) as the difference between said new content (*N_{CU}*) and a default reconstruction signal (*C_{def}*) computed (E90) for said transition block (TB);
- a writing module (WM) for writing (E230) in said altered bitstream (Bₐₗₜ), for transition blocks (TB), syntax elements (*B_{CU}*) obtained by applying (E210) a lossless residual coding to said altered residual signal (Rₐₗₜ).

8. A transcoding device (TD) comprising at least one processor (1) and a memory (3) having stored thereon a program (PROG) for implementing the method for transcoding a video default bitstream according to one of Claims 1 to 6.

9. A computer program (PROG) which on execution by a transcoding device (TD) causes the transcoding device to execute the method for transcoding a default video bitstream according to one of Claims 1 to 6.
